# FASCICULE DE BREVET EUROPEEN

(11) **EP 1 181 150 B1**
(45) Date de publication et mention de la délivrance du brevet: **10.09.2003**
(21) Numéro de dépôt: 00920843.0
(22) Date de dépôt: 19.04.2000
(51) Int. Cl.: B29D 11/00

(54) **PROCEDE POUR LE MOULAGE D'UNE LENTILLE OPTIQUE ET INSTALLATION CORRESPONDANTE**
VERFAHREN ZUM GIESSFORMEN EINER OPTISCHEN LINSE UND VORRICHTUNG ZU DEREN ANWENDUNG
METHOD FOR MOULDING AN OPTICAL LENS AND CORRESPONDING INSTALLATION

(30) Priorité: 26.05.1999 FR 9906617
(43) Date de publication de la demande: 27.02.2002
(73) Titulaire: ESSILOR INTERNATIONAL (Compagnie Générale d'Optique), F-94220 Charenton-le-Pont (FR)
(72) Inventeur: BESSIERE, Benoît, F-94260 Fresne (FR); BOUSLIMI, Naissan, F-75013 Paris (FR); LAVENIR, Marianne, F-94100 Saint Maur des Fosses (FR)
(74) Mandataire: Santarelli
(86) Numéro de dépôt international: FR0001024
(87) Numéro de publication internationale: WO00073048

(56) Documents cités:
- EP-A- 0 183 324
- FR-A- 1 316 497
- US-A- 4 786 444
- US-A- 5 372 755
- US-A- 5 547 618
- US-A- 5 733 585

## Description

La présente invention concerne d'une manière générale le moulage des lentilles optiques, et elle vise plus particulièrement, mais nécessairement exclusivement, celui des lentilles ophtalmiques, c'est-à-dire des verres de lunettes, notamment lorsque la matière de moulage correspondante est une matière synthétique polymérisable par irradiation.

Ainsi qu'on le sait, pour le moulage d'une lentille optique, on met usuellement en oeuvre deux coquilles de moulage aptes à définir, entre elles, conjointement avec un élément de fermeture intervenant à leur périphérie, la cavité de moulage nécessaire, et on assure le remplissage de celle-ci en matière de moulage.

Il existe des installations pour la production automatique de lentilles optiques. Le document EP-A-0 183 324 propose une installation de ce type, qui comporte une table rotative autour de laquelle sont installés dix postes opérationnels assurant respectivement le chargement de paires de demi moules sur des préhenseurs, le centrage spatial et radial des demi moules de chaque paire, l'assemblage et le centrage d'un élément de liaison annulaire sur chaque paire de demi moule, la vérification de cet assemblage, le transfert des moules assemblés depuis les préhenseurs vers des paniers de transport, le nettoyage des préhenseurs, le rechargement des moules contenant les lentilles sur les préhenseurs, l'extraction des lentilles des moules et le déchargement des lentilles vers un collecteur.

Toutefois, le plus souvent, à ce jour, en production de série, tout ou partie des opérations correspondantes sont assurées manuellement.

Mais, actuellement, pour répondre à l'attente des intéressés, qui souhaitent être livrés au plus vite, et pour satisfaire cependant au grand nombre de prescriptions envisageables, qui peuvent être très variées, il est recherché une production unitaire.

Il est corollairement souhaitable que certaines, au moins, des diverses opérations requises pour une telle production unitaire puissent en tout ou partie être automatisées.

Le problème, en l'espèce, tient, notamment, à ce que, pour satisfaire à une quelconque prescription, il est nécessaire d'assurer un contrôle rigoureux de la position des deux coquilles de moulage l'une par rapport à l'autre.

Dans le cas, par exemple, de prescriptions toriques, et indépendamment de l'épaisseur au centre, qui dépend de la distance au centre correspondante entre les deux coquilles de moulage, le tore de la lentille optique moulée dépend de la position angulaire de ces deux coquilles de moulage l'une par rapport à l'autre et son prisme dépend de l'inclinaison éventuelle de l'une et/ou de l'autre de ces coquilles de moulage par rapport à un quelconque plan transversal pris comme plan de référence.

La présente invention a pour objets un procédé, et une installation, permettant de surmonter ces difficultés, et autorisant, notamment, une fabrication très rapide, dès réception d'une commande, et, de préférence, en moins d'une heure, de toute lentille ophtalmique répondant à une prescription donnée.

Le procédé suivant l'invention est caractérisé, d'une manière générale, par l'exécution des opérations suivantes : on place chacune respectivement les deux coquilles de moulage dans deux moyens de maintien individuels montés rotatifs autour d'un axe de centrage commun, on fait tourner, si nécessaire, l'un au moins de ces moyens de maintien autour de cet axe de centrage, jusqu'à obtenir la position angulaire correspondant au tore éventuellement recherché, on extrait chacune des deux coquilles de moulage de son moyen de maintien à l'aide d'un moyen de prélèvement, on contrôle l'inclinaison éventuelle de chacune des coquilles de moulage par rapport à un plan de référence alors qu'une telle coquille de moulage est ainsi en prise avec son moyen de prélèvement, on ajuste, si nécessaire, la position de l'une au moins des coquilles de moulage sur son moyen de prélèvement, jusqu'à obtenir l'inclinaison correspondant au prisme recherché, on rapproche les deux coquilles de moulage l'une de l'autre à l'aide de leur moyen de prélèvement en conservant leur position par rapport à ce moyen de prélèvement, on dispose l'élément de fermeture autour des deux coquilles de moulage, et on assure le remplissage en matière de moulage de la cavité de moulage ainsi formée.

Lorsque la matière de moulage est une matière synthétique polymérisable par irradiation, on soumet, ensuite, à un moyen d'irradiation l'ensemble constitué par les deux coquilles de moulage, l'élément de fermeture, et la masse de matière de moulage remplissant la cavité de moulage correspondante.

Corollairement, et abstraction faite, éventuellement, de la mise en place initiale de chacune des coquilles de moulage dans un moyen de maintien, l'installation suivant l'invention comporte les moyens propres à une exécution automatique de ces diverses opérations.

Plus précisément, elle comporte, outre les deux moyens de maintien et les deux moyens de prélèvement nécessaires, au moins deux postes de travail distincts propres à l'exécution des opérations à assurer, et des moyens de transfert aptes à un déplacement relatif de chacune des coquilles de moulage par rapport à chacun de ces postes de travail.

Préférentiellement, les deux coquilles de moulage sont traitées en même temps, ce qui est favorable à la conservation d'un même axe de centrage pour les deux.

Préférentiellement, également, pour le contrôle de leur inclinaison éventuelle par rapport à un plan de référence, et, donc, pour l'obtention du prisme éventuellement recherché, on applique chacune des coquilles de moulage, par sa face avant, et, donc, par la face utile, c'est-à-dire par la face par laquelle elle définit pour sa part la cavité de moulage, contre des palpeurs permettant d'apprécier la distance d'un nombre choisi de points de cette face utile par rapport au plan de référence retenu.

Certes, il est connu, par le brevet français No 1 316 497, de mettre en oeuvre de tels palpeurs.

Mais, dans ce brevet français No 1 316 497, les palpeurs interviennent sur la face arrière des coquilles de moulage, et donc sur la face de ces coquilles de moulage opposée à la cavité de moulage, et les coquilles de moulage sont amenées au contact de ces palpeurs par injection d'air comprimé entre elles.

Il n'est pas possible, dans ces conditions, d'assurer que, après le relâchement de l'air comprimé, les coquilles de moulage ne soient pas l'objet d'un quelconque mouvement intempestif, au détriment de leur position relative l'une par rapport à l'autre.

Il n'en est pas de même lorsque, suivant l'invention, les palpeurs interviennent directement sur la face utile de ces coquilles de moulage alors même qu'elles sont chacune dûment maintenues par leur moyen de prélèvement.

Corollairement, les divers moyens de transfert intervenant d'un poste de travail à un autre dans l'installation de moulage suivant l'invention sont avantageusement garants de la conservation de l'axe de centrage commun à ces deux coquilles de moulage.

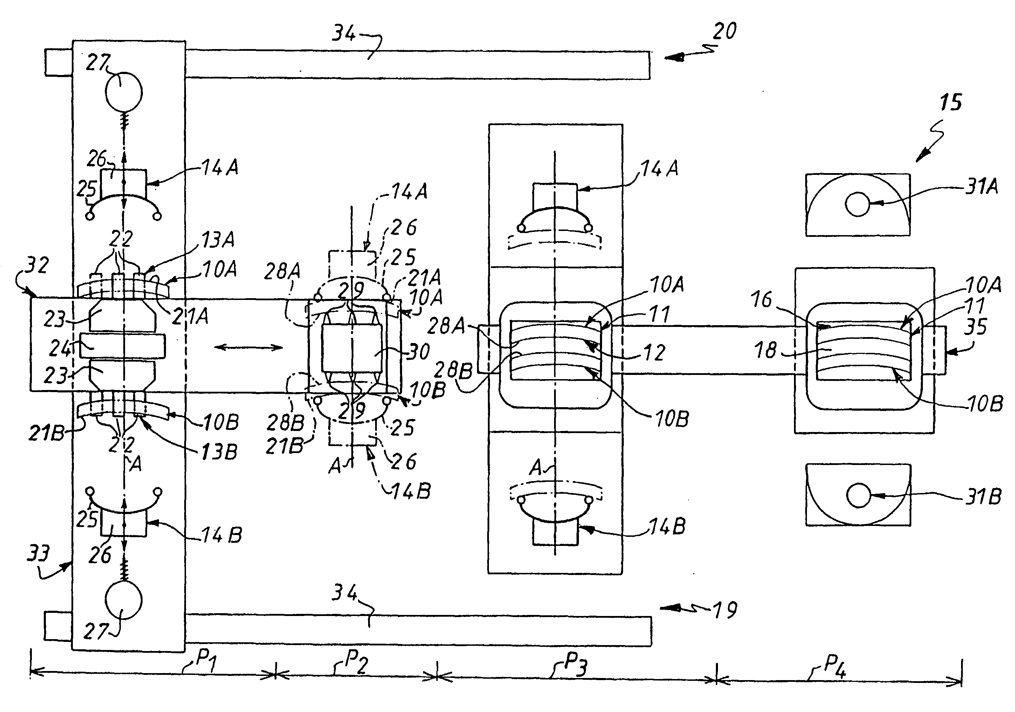

Les caractéristiques et avantages de l'invention ressortiront d'ailleurs de la description qui va suivre, à titre d'exemple, en référence au dessin schématique annexé dont la figure unique est un bloc diagramme d'une installation de moulage suivant l'invention.

Tel qu'illustré sur cette figure, il s'agit, globalement, d'assurer l'assemblage de deux coquilles de moulage 10A, 10B, l'une concave, l'autre convexe, pour le moulage d'une lentille optique, et, par exemple, d'une lentille ophtalmique, c'est-à-dire un verre de lunettes, en respectant la prescription à laquelle une telle lentille ophtalmique doit satisfaire.

De manière connue en soi, les deux coquilles de moulage 10A, 10B se présentent sous la forme de palets de contour circulaire, et, pour le moulage recherché, elles sont mises en oeuvre conjointement avec un élément de fermeture 11 intervenant à leur périphérie, en définissant ainsi avec lui la cavité de moulage 12 nécessaire.

Par exemple, ces coquilles de moulage 10A, 10B sont en verre.

Quant à l'élément de fermeture 11, il peut par exemple s'agir d'un simple manchon, réalisé d'un seul tenant ou à l'aide d'un ruban dûment enroulé autour des coquilles de moulage 10A, 10B.

Mais, en variante, et préférentiellement, il peut également s'agir d'un appareillage du type de celui faisant l'objet de la demande de brevet français qui, déposée le 12 décembre 1994, sous le No 94 14927, a été publiée sous le No 2 727 895.

Suivant l'invention, pour le moulage à assurer, on procède, globalement, à l'exécution des opérations suivantes : on place chacune respectivement les deux coquilles de moulage 10A, 10B dans deux moyens de maintien 13A, 13B individuels montés rotatifs autour d'un axe de centrage A commun, on fait tourner, si nécessaire, l'un au moins de ces moyens de maintien 13A, 13B autour de cet axe de centrage A, jusqu'à obtenir la position angulaire souhaitée pour les deux coquilles de moulage 10A, 10B l'une par rapport à l'autre, c'est-à-dire la position angulaire correspondant au tore éventuellement recherché, on extrait chacune des deux coquilles de moulage 10A, 10B de son moyen de maintien 13A, 13B à l'aide d'un moyen de prélèvement 14A, 14B, on contrôle l'inclinaison éventuelle de chacune des coquilles de moulage 10A, 10B par rapport à un plan de référence alors qu'une telle coquille de moulage 10A, 10B est ainsi en prise avec son moyen de prélèvement 14A, 14B, on ajuste, si nécessaire, la position de l'une au moins des coquilles de moulage 10A, 10B sur son moyen de prélèvement 14A, 14B, jusqu'à obtenir l'inclinaison correspondant au prisme recherché, on rapproche les deux coquilles de moulage 10A, 10B l'une de l'autre à l'aide de leur moyen de prélèvement 14A, 14B en conservant leur position par rapport à ce moyen de prélèvement 14A, 14B, on dispose l'élément de fermeture 11 autour des deux coquilles de moulage 10A, 10B, et on assure le remplissage en matière de moulage de la cavité de moulage 12 ainsi formée.

Lorsque cette matière de moulage est une matière synthétique polymérisable par irradiation, ce qui est le cas pratique le plus fréquent, on soumet, ensuite, à un moyen d'irradiation 15 l'ensemble 16 constitué par les deux coquilles de moulage 10A, 10B, l'élément de fermeture 11, et la masse 18 de matière de moulage remplissant alors la cavité de moulage 12 correspondante.

Outre les deux moyens de maintien 13A, 13B aptes chacun à la saisie d'une coquille de moulage 10A, 10B et montés rotatifs autour d'un axe de centrage A commun et les deux moyens de prélèvement 14A, 14B aptes chacun à l'extraction d'une coquille de moulage 10A, 10B de son moyen de maintien 13A, 13B, l'installation de moulage 19 suivant l'invention comporte, globalement, d'une part, au moins deux postes de travail P1, P2, P3, P4 distincts propres à l'exécution des opérations à assurer, et, d'autre part, suivant des dispositions décrites plus en détail ultérieurement, des moyens de transfert 20 aptes à un déplacement relatif de chacune des coquilles de moulage 10A, 10B par rapport à chacun de ces postes de travail P1, P2, P3, P4.

Préférentiellement, et cela est le cas dans l'installation de moulage 19 représentée, les deux coquilles de moulage 10A, 10B sont traitées en même temps.

Cette installation de moulage 19 ne sera pas décrite dans tous ses détails ici.

Seuls en seront succinctement décrits dans ce qui suit les éléments essentiels.

Dans la forme de réalisation représentée, l'installation de moulage 19 suivant l'invention comporte, tout d'abord, un premier poste de travail P1, qui, par son équipement, et ainsi qu'il apparaîtra plus complètement ci-après, est apte à permettre d'assurer la mise en place de chacune des coquilles de moulage 10A, 10B dans son moyen de maintien 13A, 13B, le centrage d'une telle coquille de moulage 10A, 10B par rapport à l'axe de centrage A, et, si nécessaire, une rotation éventuelle de l'un au moins des moyens de maintien 13A, 13B autour de cet axe de centrage A, pour le réglage du tore éventuellement requis pour la lentille optique à mouler.

Par exemple, et tel que schématisé sur la figure, les moyens de maintien 13A, 13B appartiennent à l'équipement de ce premier poste de travail P1, et chacun de ces moyens de maintien 13A, 13B comporte trois mors 22, par lesquels il est apte à saisir une coquille de moulage 10A, 10B par sa tranche, en intervenant donc à la périphérie de cette coquille de moulage 10A, 10B, et qui sont montés mobiles sur une embase 23, elle-même montée rotative sur un socle 24 autour de l'axe de centrage A commun à l'ensemble.

Préférentiellement, les mors 22 interviennent également sur la face arrière 21A, 21B de la coquille de moulage 10A, 10B concernée, c'est-à-dire sur la face de celle-ci opposée à la cavité de moulage 12.

Ainsi, les moyens de maintien 13A, 13B permettent avantageusement d'assurer simultanément, au cours d'une première étape, le centrage, par son bord, c'est-à-dire par sa tranche, d'une telle coquille de moulage 10A, 10B, et son placage, par sa face arrière 21A, 21B, sur trois points de référence, en l'espèce les trois mors 22 correspondants.

Dans la forme de réalisation représentée, les embases 23 des deux moyens de maintien 13A, 13B interviennent dos à dos sur un même socle 24, en sorte que, d'un de ces moyens de maintien 13A, 13B à l'autre, les mors 22 sont dirigés en sens opposés les uns par rapport aux autres.

Par exemple, pour le centrage recherché, les mors 22 sont montés mobiles radialement sur l'embase 23 qui les porte.

Corollairement, dans cette forme de réalisation, chacun des moyens de prélèvement 14A, 14B destinés à permettre d'extraire les coquilles de moulage 10A, 10B de leur moyen de maintien 13A, 13B comporte une ventouse 25 montée de manière rotulaire sur un support 26.

De préférence, et suivant des dispositions non représentées sur la figure, la rotule intervenant ainsi entre la ventouse 25 et le support 26 peut être bloquée à volonté.

Par exemple, et tel que schématisé sur la figure, les moyens de prélèvement 14A, 14B sont chacun sous le contrôle d'un moteur 27 apte à en commander un déplacement en va-et-vient suivant l'axe de centrage A.

Dans la forme de réalisation représentée, l'installation de moulage 19 suivant l'invention comporte un deuxième poste de travail P2, qui, par son équipement, et ainsi qu'il apparaîtra plus complètement ci-après, est apte à permettre le contrôle de l'inclinaison éventuelle de chacune des coquilles de moulage 10A, 10B par rapport à un plan de référence, pour le réglage du prisme requis pour la lentille optique à mouler.

Préférentiellement, pour ce contrôle, et tel que schématisé en traits interrompus sur la figure, on applique chacune des coquilles de moulage 10A, 10B, par sa face utile 28A, 28B, c'est-à-dire par sa face avant, contre au moins trois palpeurs 29, cette face utile 28A, 28B étant la face, concave pour la coquille de moulage 10A, et convexe pour la coquille de moulage 10B, par laquelle une telle coquille de moulage 10A, 10B participe pour sa part à la définition de la cavité de moulage 12.

Pour chacune des coquilles de moulage 10A, 10B, l'équipement du deuxième poste de travail P2 de l'installation de moulage 19 suivant l'invention comporte, donc, un jeu d'au moins trois palpeurs 29, dont deux, au moins, sont mobiles parallèlement à l'axe de centrage A.

Par exemple, quatre palpeurs 29 sont prévus, en croix les uns par rapport aux autres.

Dans la forme de réalisation représentée, l'équipement du deuxième poste de travail P2 comporte, dos à dos, sur un même support 30, deux jeux de palpeurs 29, à raison d'un par coquille de moulage 10A, 10B.

Ainsi qu'il est aisé de le comprendre, le plan de référence pris en compte lors de l'intervention des palpeurs 29 est un plan transversal par rapport à l'axe de centrage A.

Préférentiellement, lors du contrôle de l'inclinaison éventuelle des coquilles de moulage 10A, 10B par rapport à ce plan de référence, on prend aussi en compte, par les palpeurs 29, la distance au centre de chacune de ces coquilles de moulage 10A, 10B par rapport à ce plan de référence.

Quoi qu'il en soit, la prise de référence ainsi faite, au poste de travail P2, sur les faces utiles 28A, 28B des coquilles de moulage 10A, 10B permet avantageusement, au cours d'une seconde étape, de s'affranchir des éventuelles erreurs de prisme entre les faces de chacune de ces coquilles de moulage 10A, 10B.

Dans la forme de réalisation représentée, l'installation de moulage 19 suivant l'invention comporte un troisième poste de travail P3 qui, par son équipement, et ainsi qu'il apparaîtra plus complètement ci-après, est apte à permettre de rapprocher les deux coquilles de moulage 10A, 10B l'une par rapport à l'autre, en tenant compte de la distance au centre précédemment relevée, ce qui permet de régler l'épaisseur au centre requise pour la lentille optique à mouler, et apte à permettre, également, de disposer l'élément de fermeture 11 autour de ces deux coquilles de moulage 10A, 10B, et de remplir en matière de moulage la cavité de moulage 12 alors ainsi formée.

Dans cette forme de réalisation, l'installation de moulage 19 suivant l'invention comporte, en outre, un quatrième poste de travail P4 qui, par son équipement, est apte à permettre l'irradiation requise de l'ensemble 16 précédemment obtenu.

En pratique, l'équipement de ce quatrième poste de travail P4 se réduit au moyen d'irradiation 15.

Par exemple, et tel que schématisé sur la figure, ce moyen d'irradiation 15 comporte deux lampes à rayonnement ultraviolet 31A, 31B, qui sont disposées en regard l'une de l'autre, à distance l'une de l'autre, et entre lesquelles est inséré l'ensemble 16 à irradier.

Corollairement, les moyens de transfert 20 de l'installation de moulage 19 suivant l'invention comportent, tout d'abord, dans la forme de réalisation représentée, une table 32, qui est montée mobile en va-et-vient entre le premier poste de travail P1 et le deuxième poste de travail P2, sensiblement perpendiculairement à l'axe de centrage A, et qui porte l'équipement de chacun de ces postes de travail P1, P2.

Les moyens de transfert 20 comportent, ensuite, une deuxième table 33, qui est montée mobile en va-et-vient entre le premier poste de travail P1 et le troisième poste de travail P3, et sur laquelle interviennent les moyens de prélèvement 14A, 14B et le moteur 27 de ceux-ci.

Par exemple, et tel que schématisé sur la figure, cette deuxième table 33, qui est globalement orthogonale à la première table 32, est montée mobile sur des rails 34.

Dans la forme de réalisation représentée, les moyens de transfert 20 comportent, enfin, une troisième table 35, qui est montée mobile en va-et-vient entre le troisième poste de travail P3 et le quatrième poste de travail P4, sensiblement perpendiculairement à l'axe de centrage A, et sur laquelle intervient l'élément de fermeture 11, notamment lorsque, -comme envisagé ci-dessus, cet élément de fermeture 11 est un appareillage du type de celui décrit dans le brevet français No 94 14927.

Bien entendu, les différentes tables 32, 33 et 35 ainsi mises en oeuvre sont motorisées.

En service, il est d'abord procédé au chargement des coquilles de moulage 10A, 10B sur les moyens de maintien 13A, 13B, c'est-à-dire à la mise en place de ces coquilles de moulage 10A, 10B entre les mors 22 de ces moyens de maintien 13A, 13B, puis au centrage des coquilles de moulage 10A, 10B par l'action des mors 22 qui les enserrent, et, enfin, au réglage du tore éventuellement recherché.

Les moyens de prélèvement 14A, 14B sont ensuite appliqués aux coquilles de moulage 10A, 10B par leur ventouse 25, et, par ces moyens de prélèvement 14A, 14B, les coquilles de moulage 10A, 10B sont extraites des moyens de maintien 13A, 13B.

Ainsi qu'on le notera, les moyens de prélèvement 14A, 14B interviennent sur la face arrière 21A, 21B des coquilles de moulage 10A, 10B.

Après le déplacement nécessaire de la table 32, les coquilles de moulage 10A, 10B sont appliquées, par les moyens de prélèvement 14A, 14B, contre les palpeurs 29 du deuxième poste de travail P2, et il est procédé au réglage du prisme requis, en intervenant, si nécessaire, pour ce faire, sur la position des ventouses 25 par rapport au support 26 qui les porte.

Par les moyens de prélèvement 14A, 14B avec lesquels elles demeurent en prise, les coquilles de moulage 10A, 10B sont ensuite dégagées des palpeurs 29, et, par la table 33 portant les moyens de prélèvement 14A, 14B, elles sont amenées au troisième poste de travail P3, pour leur assemblage avec l'élément de fermeture 11 et le remplissage de la cavité de moulage 12 alors ainsi formée.

Par la table 35, l'ensemble 16 correspondant est ensuite amené au quatrième poste de travail P4.

Ainsi qu'on le notera, l'installation de moulage 19 suivant l'invention permet avantageusement d'exécuter sans discontinuité l'ensemble des opérations à assurer.

En outre, elles sont toutes avantageusement susceptibles d'être effectuées mécaniquement, et, donc, d'intervenir automatiquement, à l'exception, éventuellement, de celles concernant la mise en place des coquilles de moulage 10A, 10B dans les moyens de maintien 13A, 13B, le centrage de ces coquilles de moulage 10A, 10B sur ces moyens de maintien 13A, 13B, le réglage éventuel de leur position angulaire, et le réglage éventuel de leur inclinaison.

Bien entendu, la présente invention ne se limite pas aux formes de réalisation et de mise en oeuvre décrites et représentées, mais englobe toute variante d'exécution.

## Revendications

1. Procédé pour le moulage d'une lentille optique, du genre suivant lequel on met en oeuvre deux coquilles de moulage (10A, 10B) aptes à définir, entre elles, conjointement avec un élément de fermeture (11) intervenant à leur périphérie, la cavité de moulage (12) nécessaire, **caractérisé par** l'exécution des opérations suivantes : on place chacune respectivement les deux coquilles de moulage (10A, 10B) dans deux moyens de maintien (13A, 13B) individuels montés rotatifs autour d'un axe de centrage (A) commun, on fait tourner, si nécessaire, l'un au moins de ces moyens de maintien (13A, 13B) autour de cet axe de centrage (A), on extrait chacune des deux coquilles de moulage (10A, 10B) de son moyen de maintien (13A, 13B) à l'aide d'un moyen de prélèvement (14A, 14B), on contrôle l'inclinaison éventuelle de chacune des coquilles de moulage (10A, 10B) par rapport à un plan de référence alors qu'une telle coquille de moulage (10A, 10B) est ainsi en prise avec son moyen de prélèvement (14A, 14B), on ajuste, si nécessaire, la position de l'une au moins des coquilles de moulage (10A, 10B) sur son moyen de prélèvement (14A, 14B), on rapproche les deux coquilles de moulage (10A, 10B) l'une de l'autre à l'aide de leur moyen de prélèvement (14A, 14B) en conservant leur position par rapport à ce moyen de prélèvement (14A, 14B), on dispose l'élément de fermeture (11) autour des deux coquilles de moulage (10A, 10B), et on assure le remplissage en matière de moulage de la cavité de moulage (12) ainsi formée.

2. Procédé suivant la revendication 1, **caractérisé en ce que**, pour le contrôle de l'inclinaison éventuelle de chacune des coquilles de moulage (10A, 10B) par rapport à un plan de référence, on applique une telle coquille de moulage (10A, 10B), par sa face utile (28A, 28B), contre des palpeurs (29).

3. Procédé suivant l'une quelconque des revendications 1, 2, **caractérisé en ce que**, lors du contrôle de l'inclinaison éventuelle de chacune des coquilles de moulage (10A, 10B) par rapport à un plan de référence, on prend en compte la distance au centre de chacune de ces coquilles de moulage (10A, 10B) par rapport à ce plan de référence.

4. Procédé suivant l'une quelconque des revendications 1 à 3, **caractérisé en ce que** les deux coquilles de moulage (10A, 10B) sont traitées en même temps.

5. Procédé suivant l'une quelconque des revendications 1 à 4, **caractérisé en ce que**, la matière de moulage étant une matière synthétique polymérisable par irradiation, on soumet à un moyen d'irradiation (15) l'ensemble (16) constitué par les deux coquilles de moulage (10A, 10B), l'élément de fermeture (11), et la masse (18) de matière de moulage remplissant alors la cavité de moulage (12) correspondante.

6. Procédé suivant l'une quelconque des revendications 1 à 5, **caractérisé en ce qu'**on exécute sans discontinuité l'ensemble des opérations à assurer.

7. Installation de moulage pour lentille optique comportant au moins deux postes de travail (P1, P2, P3, P4) distincts propres à l'exécution des opérations à assurer, **caractérisée en ce que**, pour la mise en oeuvre d'un procédé conforme à l'une quelconque des revendications 1 à 6, elle comporte, outre deux moyens de maintien (13A, 13B) aptes chacun à la saisie d'une coquille de moulage (10A, 10B) et montés rotatifs autour d'un axe de centrage (A) commun et deux moyens de prélèvement (14A, 14B) aptes chacun à l'extraction d'une coquille de moulage (10A, 10B) de son moyen de maintien (13A, 13B), d'une part, des moyens pour l'assemblage des coquilles de moulage (10A, 10B) avec un élément de fermeture (11), et, d'autre part, des moyens de transfert (20) aptes à un déplacement relatif de chacune des coquilles de moulage (10A, 10B) par rapport à chacun de ces postes de travail (P1, P2, P3, P4).

8. Installation de moulage suivant la revendication 7, **caractérisée en ce que** chacun des moyens de maintien (13A, 13B) comporte trois mors (22), par lesquels il est apte à saisir une coquille de moulage (10A, 10B) par sa tranche, et qui sont montés mobiles sur une embase (23), elle-même montée rotative sur un sodé (24).

9. Installation de moulage suivant la revendication 8, **caractérisée en ce que** les mors (22) interviennent également sur la face arrière (21A, 21B) de la coquille de moulage (10A, 10B) concernée.

10. Installation de moulage suivant l'une quelconque des revendications 8, 9, **caractérisée en ce que** les embases (23) des deux moyens de maintien (13A, 13B) interviennent dos à dos sur un même socle (24).

11. Installation de moulage suivant l'une quelconque des revendications 8 à 10, **caractérisée en ce que** chacun des moyens de prélèvement (14A, 14B) comporte une ventouse (25) montée de manière rotulaire sur un support (26).

12. Installation de moulage suivant la revendication 11, **caractérisée en ce que** la rotule intervenant entre la ventouse (25) et le support (26) peut être bloquée à volonté.

13. Installation de moulage suivant l'une quelconque des revendications 7 à 12, **caractérisée en ce qu'**elle comporte un premier poste de travail (P1) qui, par son équipement, est apte à permettre d'assurer la mise en place de chacune des coquilles de moulage (10A, 10B) dans son moyen de maintien (13A, 13B), et, si nécessaire, une rotation éventuelle de l'un au moins de ces moyens de maintien (13A, 13B) autour de l'axe de centrage (A).

14. Installation de moulage suivant la revendication 13, **caractérisée en ce qu'**elle comporte un deuxième poste de travail (P2) qui, par son équipement, est apte à permettre le contrôle de l'inclinaison éventuelle de chacune des coquilles de moulage (10A, 10B) par rapport à un plan de référence.

15. Installation de moulage suivant la revendication 14, **caractérisée en ce que**, pour chacune des coquilles de moulage (10A, 10B), l'équipement du deuxième poste de travail (P2) comporte un jeu d'au moins trois palpeurs (29).

16. Installation de moulage suivant la revendication 15, **caractérisée en ce que** l'équipement du deuxième poste de travail (P2) comporte, dos à dos, sur un même support (30), deux jeux de palpeurs (29), à raison d'un par coquille de moulage (10A, 10B).

17. Installation de moulage suivant l'une quelconque des revendications 7 à 16, **caractérisée en ce qu'**elle comporte un troisième poste de travail (P3) qui, par son équipement, est apte à permettre de rapprocher les deux coquilles de moulage (10A, 10B) l'une par rapport à l'autre, de disposer l'élément de fermeture (11) autour de ces deux coquilles de moulage (10A, 10B), et de remplir en matière de moulage la cavité de moulage (12) alors ainsi formée.

18. Installation de moulage suivant l'une quelconque des revendications 7 à 17, **caractérisée en ce qu'**elle comporte un quatrième poste de travail (P4) qui, par son équipement, est apte à permettre l'irradiation de l'ensemble (16) constitué par les deux coquilles de moulage (10A, 10B), l'élément de fermeture (11), et la masse (18) de matière de moulage remplissant la cavité de moulage (12) correspondante.

19. Installation de moulage suivant les revendications 13 et 14, prises conjointement, **caractérisée en ce que** les moyens de transfert (20) comportent une table (32), qui est montée mobile en va-et-vient entre le premier poste de travail (P1) et le deuxième poste de travail (P2), et qui porte l'équipement de chacun de ces postes de travail (P1, P2).

20. Installation de moulage suivant les revendications 7 et 17, prises conjointement, **caractérisée en ce que** les moyens de transfert (20) comporient une table (33), qui est montée mobile en va-et-vient entre le premier poste de travail (P1) et le troisième poste de travail (P3), et sur laquelle interviennent les moyens de prélèvement (14A, 14B).

21. Installation de moulage suivant les revendications 17 et 18, prises conjointement, **caractérisée en ce que** les moyens de transfert (20) comportent une table (35), qui est montée mobile en va-et-vient entre le troisième poste de travail (P3) et le quatrième poste de travail (P4), et sur laquelle intervient l'élément de fermeture (11).

## Patentansprüche

1. Verfahren zum Gießen einer optischen Linse, vom Typ, gemäß welchem man zwei Formoder Gusskokillen (10A, 10B) verwendet, geeignet, um dazwischen gemeinsam mit einem Verschlusselement (11), welches an der Peripherie davon vorliegt, den erforderlichen Gusshohlraum (12) zu definieren, **gekennzeichnet durch** die Ausführung der folgenden Schritte: Anordnen von jeweils den zwei Form- oder Gusskokillen (10A, 10B) an zwei halbindividuellen Halteeinrichtungen (13A, 13B), drehbar montiert bezüglich einer gemeinsamen Zentrierachse (A), Drehen, falls erforderlich, von zumindest einer der Halteeinrichtungen (13A, 13B) um die Zentrierachse (A), Extrahieren jeder der zwei Formoder Gusskokillen (10A, 10B) von ihrer Halteeinrichtung (13A, 13B) mittels einer Entnahmeeinrichtung (14A, 14B), Steuern einer eventuellen Neigung oder Schrägstellung von jeder der Form- oder Gusskokillen (10A, 10B) mit Bezug auf eine Referenzebene, wenn eine solche Form- oder Gusskokille (10A, 10B) entsprechend in Eingriff steht mit ihrer Entnahmeeinrichtung (14A, 14B), Einstellen, insoweit nötig, der Position von zumindest einer der Form- oder Gusskokillen (10A, 10B) an ihrer Entnahmeeinrichtung (14A, 14B), Annähern der zwei Form- oder Gusskokillen (10A, 10B) mit Bezug zueinander mittels ihrer Entnahmeeinrichtung (14A, 14B), wobei deren Position mit Bezug auf die Entnahmeeinrichtung (14A, 14B) beibehalten wird, Anordnen des Verschlusselements (11) herum um die zwei Form- oder Gusskokillen (10A, 10B), Gewährleisten der Füllung des so gebildeten Form- oder Gusshohlraums (12) mit Gussmaterial.

2. Verfahren nach Anspruch 1, **dadurch gekennzeichnet, dass** zur Steuerung der eventuellen Schrägstellung oder Neigung von jeder der Form- oder Gusskokillen (10A, 10B) mit Bezug auf eine Referenzebene die Form- oder Gusskokille (10A, 10B) mittels ihrer nutzbaren Fläche (28A, 28B) bezüglich Tastern (29) in Anlage bzw. Eingriff gebracht wird.

3. Verfahren nach einem der Ansprüche 1, 2, **dadurch gekennzeichnet, dass** während der Steuerung der eventuellen Neigung oder Schrägstellung von jeder der Form- oder Gusskokillen (10A, 10B) mit Bezug auf eine Referenzebene der Abstand an der Mitte oder dem Zentrum von jeder der Form- oder Gusskokillen (10A, 10B) mit Bezug auf die Referenzebene berücksichtigt wird.

4. Verfahren nach einem der Ansprüche 1 bis 3, **dadurch gekennzeichnet, dass** die zwei Form- oder Gusskokillen (10A, 10B) gleichzeitig behandelt bzw. gehandhabt werden.

5. Verfahren nach einem der Ansprüche 1 bis 4, **dadurch gekennzeichnet, dass** das Formoder Gussmaterial ein mittels Strahlung polymerisierbares synthetisches bzw. Kunststoff-Material ist, wobei die Anordnung (16), gebildet aus den zwei Form- oder Gusskokillen (10A, 10B), dem Verschlusselement (11) und der Masse (18) aus Form- oder Gussmaterial, welche den entsprechenden Form- oder Gusshohlraum (12) füllt, einer Strahlungs- bzw. Bestrahlungseinrichtung (15) ausgesetzt wird.

6. Verfahren nach einem der Ansprüche 1 bis 5, **dadurch gekennzeichnet, dass** sämtliche Verfahrensschritte ohne Unterbrechung durchgeführt werden.

7. Vorrichtung zum Formen bzw. Gießen einer optischen Linse, umfassend zumindest zwei distinkte Arbeitsstationen (P1, P2, P3, P4), geeignet zur Durchführung der zu gewährleistenden Schritte, **dadurch gekennzeichnet, dass** zum Ausführen eines Verfahrens nach einem der Ansprüche 1 bis 6 sie ferner umfasst zwei Halteeinrichtungen (13A, 13B), fähig jeweils zum Eingriff bzw. zum Erfassen einer Form- oder Gusskokille (10A, 10B) und drehbar montiert bezüglich einer gemeinsamen Zentrierachse (A), sowie zwei Entnahmeeinrichtungen (14A, 14B), jeweils fähig oder geeignet zur Extraktion oder Entnahme einer Form- oder Gusskokille (10A, 10B) von ihrer Halteeinrichtung (13A, 13B) und einerseits Mittel zum Zusammenbau der Form- oder Gusskokillen (10A, 10B) mit einem Verschlusselement (11), sowie andererseits Übertragungsmittel (20), geeignet zur Relativbewegung von jeder der Form- oder Gusskokillen (10A, 10B) mit Bezug auf eine jede der Arbeitsstationen (P1, P2, P3, P4).

8. Vorrichtung zum Gießen oder Formen nach Anspruch 7, **dadurch gekennzeichnet, dass** jede der Halteeinrichtungen (13A, 13B) drei Backen (22) umfasst, mittels welcher ein Erfassen oder Eingreifen einer Form- oder Gusskokille (10A, 10B) am Rand ermöglicht ist und welche beweglich an einer Basis (23) montiert sind, welche wiederum drehbar an einem Sockel (24) montiert ist.

9. Vorrichtung zum Formen oder Gießen nach Anspruch 8, **dadurch gekennzeichnet, dass** die Backen (22) ebenfalls auf die Heck- oder Rückfläche (21A, 21B) der in Frage stehenden Form- oder Gusskokille (10A, 10B) einwirken.

10. Vorrichtung zum Formen oder Gießen nach einem der Ansprüche 8, 9, **dadurch gekennzeichnet, dass** die Basen (23) von zwei Halteeinrichtungen (13A, 13B) Rücken an Rücken an ein und demselben Sockel (24) vorgesehen sind.

11. Vorrichtung zum Formen oder Gießen nach einem der Ansprüche 8 bis 10, **dadurch gekennzeichnet, dass** jede der Entnahmeeinrichtungen (14A, 14B) einen Saugnapf (25) umfasst, rotulenartig an einer Stütze (26) montiert.

12. Vorrichtung zum Formen oder Gießen nach Anspruch 11, **dadurch gekennzeichnet, dass** die Rotule bzw. Muffe, wirkend zwischen dem Saugnapf (25) und der Stütze (26), beliebig bzw. wunschgemäß blockierbar ist.

13. Vorrichtung zum Formen oder Gießen nach einem der Ansprüche 7 bis 12, **dadurch gekennzeichnet, dass** sie eine erste Arbeitsstation (P1) umfasst, die mittels ihrer Ausstattung in der Lage ist, die Anordnung von jeder der Form- oder Gusskokillen (10A, 10B) in ihrer Halteeinrichtung (13A, 13B) zu gewährleisten, sowie, insoweit erforderlich, eine eventuelle Rotation von zumindest einer der Halteeinrichtungen (13A, 13B) bezüglich der Zentrierachse (A) bereitzustellen.

14. Vorrichtung zum Formen oder Gießen nach Anspruch 13, **dadurch gekennzeichnet, dass** sie eine zweite Arbeitsstation (P2) umfasst, die mittels ihrer Ausstattung in der Lage ist, die Steuerung eventuelle einer Neigung oder Schrägstellung von jeder der Form- oder Gusskokillen (10A, 10B) mit Bezug auf eine Referenzebene zu ermöglichen.

15. Vorrichtung zum Formen oder Gießen nach Anspruch 14, **dadurch gekennzeichnet, dass** für jede der Form- oder Gusskokillen (10A, 10B) die Ausstattung der zweiten Arbeitsstation (P2) einen Satz von zumindest drei Tastern (29) umfasst.

16. Vorrichtung zum Formen oder Gießen nach Anspruch 15, **dadurch gekennzeichnet, dass** die Ausstattung der zweiten Arbeitsstation (P2) Rücken an Rücken an ein und derselben Stütze (30) zwei Sätze an Tastern (29) umfasst, nämlich einen je Form- oder Gusskokille (10A, 10B).

17. Vorrichtung zum Formen oder Gießen nach einem der Ansprüche 7 bis 16, **dadurch gekennzeichnet, dass** sie eine dritte Arbeitsstation (P3) umfasst, die mittels ihrer Ausstattung in der Lage ist, die Annäherung der zwei Form- oder Gusskokillen (10A, 10B) mit Bezug zueinander, das Anordnen des Verschlusselements (11) herum um die zwei Form- oder Gusskokillen (10A, 10B) und das Befüllen mit Form- oder Gussmaterial des somit definierten Form- oder Gusshohlraums (12) zu ermöglichen.

18. Vorrichtung zum Formen oder Gießen nach einem der Ansprüche 7 bis 17, **dadurch gekennzeichnet, dass** sie eine vierte Arbeitsstation (P4) umfasst, die mittels ihrer Ausstattung in der Lage ist, die Belichtung bzw. Bestrahlung der Anordnung (16), gebildet durch die zwei Form- oder Gusskokillen (10A, 10B), das Verschlusselement (11) und die Masse (18) aus Form- oder Gussmaterial, den entsprechenden Formungs- oder Gusshohlraum (12) füllend, zu ermöglichen.

19. Vorrichtung zum Formen oder Gießen nach Anspruch 13 und 14, gemeinsam, **dadurch gekennzeichnet, dass** die Übertragungseinrichtung bzw. die Übertragungsmittel (20) einen Tisch (32) umfasst bzw. umfassen, hin und her beweglich montiert zwischen der ersten Arbeitsstation (P1) und der zweiten Arbeitsstation (P2), die Ausstattung von jeder der Arbeitsstationen (P1, P2) tragend bzw. stützend.

20. Vorrichtung zum Formen oder Gießen nach Anspruch 7 und 17, gemeinsam, **dadurch gekennzeichnet, dass** die Übertragungseinrichtung bzw. die Übertragungsmittel (20) einen Tisch (33) umfasst bzw. umfassen, hin und her beweglich montiert zwischen der ersten Arbeitsstation (P1) und der dritten Arbeitsstation (P3), wobei an diesem die Entnahmeeinrichtungen (14A, 14B) vorgesehen sind bzw. werden.

21. Vorrichtung zum Formen oder Gießen nach Anspruch 17 und 18, gemeinsam, **dadurch gekennzeichnet, dass** die Übertragungseinrichtung bzw. Übertragungsmittel (20) einen Tisch (35) umfasst bzw. umfassen, hin und her beweglich montiert zwischen der dritten Arbeitsstation (P3) und der vierten Arbeitsstation (P4), wobei an diesem das Verschlusselement (11) vorgesehen ist bzw. wird.

## Claims

1. A method of molding an optical lens, of the kind in which two molding shells (10A, 10B) are used adapted to define the necessary molding cavity (12), between them, conjointly with a closure member (11) operative at their periphery, **characterized by** the execution of the following operations: each of the two molding shells (10A, 10B) is placed in one of two respective individual holding means (13A, 13B) adapted to rotate about a common centering axis (A), if necessary, at least one of these holding means (13A, 13B) is turned about that centering axis (A), each of the two molding shells (10A, 10B) is extracted from its holding means (13A, 13B) with the aid of picking means (14A, 14B), any inclination of each of the molding shells (10A, 10B) with respect to a reference plane is checked with the molding shell (10A, 10B) engaged in this way with its picking means (14A, 14B), if necessary, the position of at least one of the molding shells (10A, 10B) on its picking means (14A, 14B) is adjusted, the two molding shells (10A, 10B) are moved one toward the other with the aid of their picking means (14A, 14B), preserving their position with respect to this picking means (14A, 14B), the closure member (11) is placed around the two molding shells (10A, 10B), and the molding cavity (12) formed in this way is filled with molding material.

2. A method according to claim 1, **characterized in that**, for checking the inclination, if any, of each of the molding shells (10A, 10B) with respect to a reference plane, the active face (28A, 28B) of the molding shell (10A, 10B) is pressed against feelers (29).

3. A method according to either claim 1 or claim 2, **characterized in that**, when checking the inclination, if any, of each of the molding shells (10A, 10B) with respect to a reference plane, account is taken of the distance at the center of each of these molding shells (10A, 10B) relative to this reference plane.

4. A method according to any of claims 1 to 3, **characterized in that** the two molding shells (10A, 10B) are treated at the same time.

5. A method according to any of claims 1 to 4, **characterized in that**, the molding material being a synthetic material that can be polymerized by irradiation, the combination (16) consisting of the two molding shells (10A, 10B), the closure member (11), and the mass (18) of molding material then filling the corresponding molding cavity (12) is exposed to irradiation means (15).

6. A method according to any of claims 1 to 5, **characterized in that** all of the operations to be performed are executed without discontinuity.

7. An optical lens molding installation including at least two separate workstations (P1, P2, P3, P4) for executing the operations to be carried out, **characterized in that**, for using the method according to any of claims 1 to 6, it includes, in addition to two holding means (13A, 13B) each adapted to grasp a molding shell (10A, 10B) and adapted to rotate about a common centering axis (A) and two picking means (14A, 14B) each adapted to extract a molding shell (10A, 10B) from its holding means (13A, 13B), on the one hand, means for assembling the molding shells (10A, 10B) with a closure member (11), and, on the other hand, transfer means (20) adapted to move each of the molding shells (10A, 10B) with respect to each of the workstations (P1, P2, P3, P4).

8. A molding installation according to claim 7, **characterized in that** each of the holding means (13A, 13B) includes three jaws (22) by which it is adapted to grasp a molding shell (10A, 10B) by its edge surface, and which can move on a base (23), which itself can rotate on a plinth (24).

9. A molding installation according to claim 8, **characterized in that** the jaws (22) are also operative on the rear face (21A, 21B) of the molding shell (10A, 10B) concerned.

10. A molding installation according to either claim 8 or claim 9, **characterized in that** the bases (23) of the two holding means (13A, 13B) are back-to-back on the same plinth (24).

11. A molding installation according to any of claims 8 to 10, **characterized in that** each picking means (14A, 14B) includes a sucker (25) mounted ball-and-socket joint fashion on a support (26).

12. A molding installation according to claim 11, **characterized in that** the ball-and-socket joint operative between the sucker (25) and the support (26) can be locked at will.

13. A molding installation according to any of claims 7 to 12, **characterized in that** it includes a first workstation (P1) which, by virtue of its equipment, is adapted to place each of the molding shells (10A, 10B) in its holding means (13A, 13B), and, if necessary, to rotate at least one of the holding means (13A, 13B) about the centering axis (A).

14. A molding installation according to claim 13, **characterized in that** it includes a second workstation (P2) which, by virtue of its equipment, is adapted to check the inclination, if any, of each of the molding shells (10A, 10B) with respect to a reference plane.

15. A molding installation according to claim 14, **characterized in that**, for each of the molding shells (10A, 10B), the equipment of the second workstation (P2) includes a set of at least three feelers (29).

16. A molding installation according to claim 15,
**characterized in that** the equipment of the second workstation (P2) includes two sets of feelers (29) back-to-back on a common support (30), one for each molding shell (10A, 10B).

17. A molding installation according to any of claims 7 to 16, **characterized in that** it includes a third workstation (P3) which, by its equipment, is adapted to move the two molding shells (10A, 10B) one relative to the other, place the closure member (11) around the two molding shells (10A, 10B) and fill the molding cavity (12) then formed in this way with molding material.

18. A molding installation according to any of claims 7 to 17, **characterized in that** it includes a fourth workstation (P4) which, by virtue of its equipment, is adapted to irradiate the combination (16) consisting of the two molding shells (10A, 10B), the closure member (11), and the mass (18) of molding material filling the corresponding molding cavity (12).

19. A molding installation according to claim 13 in conjunction with claim 14, **characterized in that** the transfer means (20) include a table (32) which is adapted to reciprocate between the first workstation (P1) and the second workstation (P2) and carries the equipment of each of the workstations (P1, P2).

20. A molding installation according to claim 7 in conjunction with claim 17, **characterized in that** the transfer means (20) include a table (33) which is adapted to reciprocate between the first workstation (P1) and the third workstation (P3) and on which the picking means (14A, 14B) are operative.

21. A molding installation according to claim 17 in conjunction with claim 18, **characterized in that** the transfer means (20) include a table (35) which is adapted to reciprocate between the third workstation (P3) and the fourth workstation (P4) and on which the closure member (11) is operative.
